(19) Europäisches Patentamt
European Patent Office
Office européen des brevets

(11) **EP 1 081 457 B1**

(12) **EUROPÄISCHE PATENTSCHRIFT**

(45) Veröffentlichungstag und Bekanntmachung des Hinweises auf die Patenterteilung:
**18.06.2008 Patentblatt 2008/25**

(51) Int Cl.:
*G01B 11/02* ^(2006.01)   *G01D 5/38* ^(2006.01)

(21) Anmeldenummer: **00115881.5**

(22) Anmeldetag: **25.07.2000**

(54) **Optische Positionsmesseinrichtung**

Optical position measuring device

Dispositif optique de mesure de la position

(84) Benannte Vertragsstaaten:
**AT BE CH CY DE DK ES FI FR GB GR IE IT LI LU MC NL PT SE**

(30) Priorität: **31.08.1999 DE 19941318**

(43) Veröffentlichungstag der Anmeldung:
**07.03.2001 Patentblatt 2001/10**

(73) Patentinhaber: **Dr. Johannes Heidenhain GmbH 83292 Traunreut (DE)**

(72) Erfinder:
• **Holzapfel, Wolfgang 83119 Obing (DE)**
• **Huber, Walter 83278 Traunstein (DE)**

(56) Entgegenhaltungen:
**EP-A- 0 735 346       US-A- 5 646 730**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine optische Positionsmeßeinrichtung, die zur präzisen Bestimmung des Relativabstandes zweier zueinander beweglicher Objekte geeignet ist.

Bekannte Positionsmeßeinrichtungen umfassen eine abgetastete Teilungsstruktur als Maßverkörperung sowie eine hierzu in Meßrichtung bewegliche Abtasteinheit mit einer Lichtquelle, einer oder mehreren weiteren Teilungsstrukturen und einer Detektoranordnung. Die Erzeugung der positionsabhängigen Abtastsignale basiert in den hier interessierenden Positionsmeßeinrichtungen auf den nachfolgend erläuterten Grundprinzipien. So wird in derartigen Positionsmeßeinrichtungen mit Hilfe ein oder mehrerer erster Teilungsstrukturen ein feines Streifenmuster erzeugt, das mit Hilfe ein oder mehrerer zweiter Teilungsstrukturen zur Erzeugung der Abtastsignale abgetastet wird.

Im einfachsten Fall handelt es sich bei einer derartigen Positionsmeßeinrichtung um einen sogenannten Zweigitter-Geber, bei dem eine erste Teilungsstruktur von einer zumeist kollimierten Lichtquelle beleuchtet wird. Es resultiert ein Lichtmuster auf der nachgeordneten zweiten Teilungsstruktur, wobei die Teilungsperiode der zweiten Teilungsstruktur mit der Teilungsperiode des Lichtmusters übereinstimmt. Im Fall der Relativbewegung der beiden Teilungsstrukturen zueinander resultiert eine periodische Modulation der Lichtstrahlen, die die zweite Teilungsstruktur durchtreten; über optoelektronische Detektorelemente, die der zweiten Teilungsstruktur nachgeordnet sind, werden diese modulierten Strahlenbündel erfaßt. Aufgrund der funktionalen Wirkungen der ersten und zweiten Teilungsstrukturen, wie sie am vorhergehenden Beispiel erläutert wurden, sei die erste Teilungsstruktur nachfolgend als Projektionsteilung bezeichnet; die zweite Teilungsstruktur sei hingegen als Detektionsteilung bezeichnet.

Zur Erzeugung mehrerer phasenverschobener Abtastsignale wird in derartigen Positionsmeßeinrichtungen oftmals vorgesehen, die Teilungsperioden der Detektionsteilung und der Projektionsteilung geringfügig unterschiedlich zueinander zu wählen. Aus der Detektionsteilung tritt in diesem Fall ein Streifenmuster aus, dessen Streifen parallel zu den Teilungsstrichen der Detektionsteilung orientiert sind. Die Teilungsperiode des austretenden Streifenmusters weist desweiteren eine deutlich größere Teilungsperiode auf als das Streifenmuster auf der Detektionsteilung. Im Zusammenhang mit dem derart erzeugten austretenden Streifenmuster sei nachfolgend von einem sogenannten Vernier-Streifenmuster die Rede.

Alternativ hierzu ist es auch möglich, die Projektions- und Detektionsteilungen geringfügig zueinander zu verdrehen. Die Teilungsstriche sind dann nicht wie in den vorhergehenden Fällen parallel zueinander ausgerichtet, sondern weisen einen definierten, kleinen Winkel zueinander auf. Es ergibt sich dann ebenfalls ein austretendes Streifenmuster mit deutlich größerer Teilungsperiode, dessen Streifen jedoch senkrecht zu den Streifen der Detektionsteilung orientiert sind. Man spricht in diesem Fall von sogenannten Moiré-Streifenmustern.

In beiden Fällen, d.h. sowohl bei der Erzeugung von Vernier- als auch bei der Erzeugung von Moiré-Streifenmustern, erfolgt die eigentliche Abtastung des jeweiligen resultierenden Streifenmusters mit Hilfe einer weiteren Teilungsstruktur. Nachfolgend sei diese Teilungsstruktur der Einfachheit halber als Vernier-Teilung bezeichnet, wobei diese Bezeichnung den Fall der Erzeugung eines Moiré-Streifenmusters selbstverständlich nicht ausschließen soll. Die Vernier-Teilung hat dabei grundsätzlich die gleiche Teilungsperiode und Teilungsorientierung aufzuweisen wie das erzeugte Vernier- oder Moiré-Streifenmuster. Erst das durch die Vernier-Teilung transmittierte Licht fällt dann schließlich auf ein oder mehrere Detektorelemente.

Im Zusammenhang mit der Vernier-Teilung sei darauf hingewiesen, daß es desweiteren auch bereits bekannt ist, die Vernier-Teilung zusammen mit mehreren Detektorelementen als integrales Bauteil auszubilden, welches letztlich zur Abtastung des erzeugten Vernier- oder Moiré-Streifenmusters und zur Erzeugung der phasenverschobenen Abtastsignale dient.

Während die bislang diskutierten Positionsmeßeinrichtungen jeweils eine Kollimatoroptik umfaßten, sind auch Systeme bekannt geworden, die ohne eine derartige Kollimatoroptik arbeiten. Hierzu sei etwa auf die Veröffentlichung von R. Pettigrew mit dem Titel "Analysis of Grating Imaging and its Application to Displacement Metrology" in SPIE Vol. 36, 1st European Congress an Optics applied to Metrology (1977), S. 325 — 332 verwiesen. In derartigen Positionsmeßeinrichtungen ist zusätzlich zwischen der Lichtquelle und der Projektionsteilung eine weitere Teilungsstruktur angeordnet, die nachfolgend als Sendeteilung bezeichnet sei. Aus jedem durchlässigen Spalt bzw. Teilbereich der Sendeteilung tritt ein Lichtbündel aus, das mit Hilfe der Projektionsteilung ein periodisches Streifenmuster auf der Detektionsteilung erzeugt. Die Teilungsperiode der Sendeteilung ist hierbei so gewählt, daß sich die aus den verschiedenen Spalten austretenden Streifenmuster auf der Detektionsteilung verstärkt überlagern. Derart lassen sich auch räumlich ausgedehnte Lichtquellen, z.B. LEDs, in diesen Positionsmeßeinrichtungen einsetzen.

Zusammenfassend betrachtet umfassen die oben diskutierten Positionsmeßeinrichtungen demnach zumindest eine Projektions- und eine Detektionsteilung. Optional kann desweiteren noch eine Sendeteilung und/oder eine Vernier-Teilung vorgesehen werden, welche jeweils die oben diskutierten Funktionen übernehmen. Als Maßstab bzw. Maßverkörperung kann in diesen Positionsmeßeinrichtungen grundsätzlich die Sendeteilung, die Projektionsteilung oder aber die Detektionsteilung dienen.

Die Sendeteilung als auch die Vernierteilung sind in der Regel als Amplitudenteilungsstrukturen ausgebildet; Die Projektions- und/oder Detektionsteilungen hingegen können auch als Phasenteilungsstrukturen ausgebildet werden.

Eine wichtige Größe ist in derart aufgebauten Positionsmeßeinrichtungen grundsätzlich das Verhalten bei einer Änderung des Abtastabstandes. Dieser ist in der Regel durch den Abstand zwischen den zueinander beweglichen Teilungen definiert. Gegebenenfalls vorhandene mechanische Unzulänglichkeiten können hierbei zu mehr oder weniger großen Schwankungen des Abtastabstandes im Meßbetrieb führen. Wünschenswert ist jedoch eine möglichst geringe Beeinflussung der positionsabhängigen Ausgangssignale von derartigen Schwankungen des Abtastabstandes.

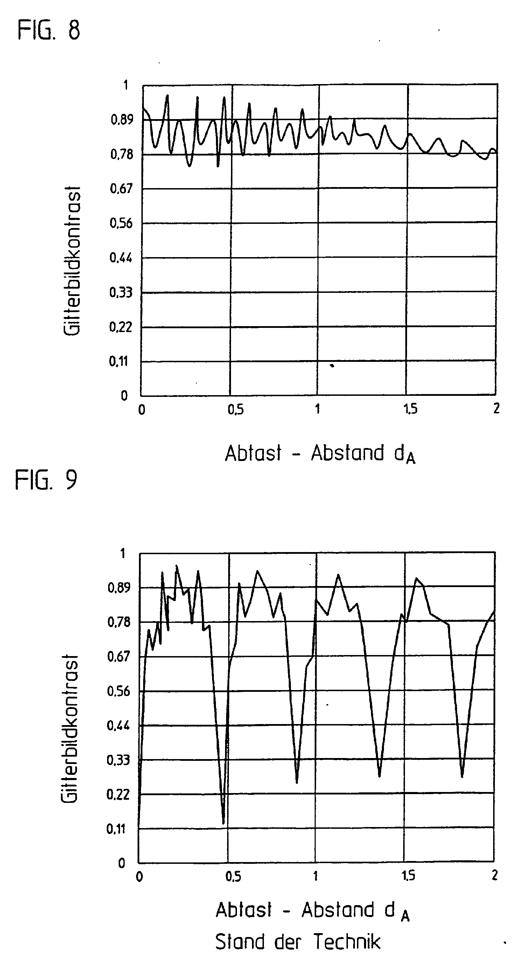

Bei den oben erwähnten Positionsmeßeinrichtungen liegt nunmehr a priori eine relativ große Abhängigkeit der detektorseitig erfaßten Signalqualität vom jeweiligen Abtastabstand vor. In Figur 9 ist zur Veranschaulichung dieser Problematik der resultierende Gitterbildkontrast eines Zwei-Gittergebers in der Detektorebene gegen den Abtastabstand aufgetragen. Hierbei wird eine Projektionsteilung verwendet, die als Phasenteilungsstruktur mit einem Phasenhub $\varphi = \pi$ und einem Steg-Lücke-Verhältnis 1:1 ausgebildet ist. Deutlich ersichtlich ist aus Fig. 9, daß es zwischen den Kontrast-Maxima starke Kontrasteinbrüche gibt, in denen lediglich kontrastarme Abtastsignale detektierbar sind. Dies wiederum bedeutet, daß im Fall eines gegebenenfalls unerwünscht schwankenden Abtastabstandes deutliche Einbußen in der Signalmodulation resultieren. Aufgrund dieser starken Abhängigkeit der Signalqualität vom jeweiligen Abtastabstand ergeben sich demzufolge hohe Anforderungen an die mechanischen Komponenten des jeweiligen Gesamtsystems, beispielsweise hinsichtlich Führungsgenauigkeiten etc..

Aus der US 5,646,730 ist nunmehr eine Positionsmeßeinrichtung bekannt, bei der die erwähnte Abtastabstands-Empfindlichkeit teilweise minimiert ist.

Die vorgeschlagene Positionsmeßeinrichtung umfaßt hierbei eine beleuchtete Transmissions-Meßteilung, die als reine Phasenstruktur ausgebildet ist und die gemäß der oben eingeführten Terminologie als Projektionsteilung fungiert. Neben der 0. Beugungsordnung werden auch die geraden Beugungsordnungen von der Projektionsteilung unterdrückt. In einem Bereich hinter der Projektionsteilung, in der im wesentlichen lediglich die ± 1. Beugungsordnungen interferieren, wird eine Detektoranordnung zur Erfassung des verschiebungsabhängig modulierten Interferenzmusters plaziert. Die Detektoranordnung besteht dabei aus mehreren einzelnen, periodisch angeordneten Detektorelementen. In der oben eingeführten Terminologie handelt es sich hierbei um die Detektionsteilung, die in diesem Fall integral mit der Detektoranordnung bzw. mehreren Detektorelementen ausgebildet ist. In einer weiteren Ausführungsform ist in dieser Druckschrift ferner vorgesehen, die Projektionsteilung als komplexe Phasenstruktur auszugestalten, die zusätzlich noch höhere ungerade Beugungsordnungen unterdrückt, wodurch sich eine etwas größere Unempfindlichkeit der Abtastsignale vom Abtastabstand bewirken läßt. Die angestrebte Abstandsunempfindlichkeit ist bei dieser vorgeschlagenen Lösung jedoch nur bedingt gegeben. So liefert eine reine Phasenstruktur trotz der Unterdrückung aller niedrigen Beugungsordnungen noch Paare von starken höheren Beugungsordnungen, die miteinander interferieren können und derart die unerwünschte Abstandsabhängigkeit verursachen. Beispielsweise zeigt sich, daß unmittelbar nach derart ausgebildeten Projektionsgittern keine resultierende Intensitätsmodulation zu beobachten ist.

Desweiteren ist eine feine Strukturierung der entsprechenden Phasenteilung nötig und demzufolge nur in Systemen mit groben Teilungsperioden einsetzbar; in derartigen Systemen wiederum ist die Abstandsabhängigkeit jedoch grundsätzlich weniger kritisch.

Als nachteilig ist an dieser Positionsmeßeinrichtung weiterhin anzusehen, daß die Maßverkörperung als komplexe Phasenstruktur ausgebildet ist. Dies hat einen relativ großen fertigungstechnischen Aufwand zur Folge, insbesondere wenn etwa eine Phasenstruktur wie sie z.B. in Fig. 34 der US 5,646,730 offenbart ist, im Fall eines Linear-Meßsystems über eine größere Meßlänge gefertigt werden muß. Desweiteren dient lediglich ein relativ kleiner beleuchteter Bereich der Projektionsteilung zur Erzeugung der positionsabhängigen Abtastsignale, woraus wiederum eine hohe Verschmutzungsempfindlichkeit des Systerns resultiert.

Aufgabe der vorliegenden Erfindung ist es daher, eine optische Positionsmeßeinrichtung anzugeben, bei der eine deutlich vergrößerte Toleranz bei der Erzeugung der positionsabhängigen Abtastsignale gegenüber Schwankungen des Abtastabstandes vorliegt. Auch bei einem eventuell variierenden Abtastabstand ist eine hinreichend konstante Signalmodulation im Fall der Relativbewegung der zueinander beweglichen Teilungen gefordert. Insbesondere sollen möglichst einfach zu fertigende Teilungsstrukturen einsetzbar sein.

Diese Aufgabe wird gelöst durch eine optische Positionsmeßeinrichtung mit den Merkmalen des Anspruches 1.

Vorteilhafte Ausführungsformen der erfindungsgemäßen optischen Positionsmeßeinrichtung ergeben sich aus den Maßnahmen, die in den abhängigen Patentansprüchen aufgeführt sind.

Erfindungsgemäß wurde nunmehr erkannt, daß auch relativ einfach zu fertigende Teilungsstrukturen in den oben diskutierten Positionsmeßeinrichtungen zur Lösung der erwähnten Aufgaben eingesetzt werden können, sofern bestimmte Teilungsstrukturen definierten Anforderungen genügen. Gemäß der vorliegenden Erfindung wird die jeweilige Projektionsteilung mit alternierend in Meßrichtung angeordneten, binären Phasen- und Amplitudenstrukturen ausgebildet, die bestimmten Bedingungen genügen.

Derartige Teilungsstrukturen sind aus der US 4,618,214 bereits grundsätzlich bekannt. Aus dieser Druckschrift ergeben sich jedoch keinerlei Hinweise, daß derartige Teilungsstrukturen in den spezifizierten Positionsmeßeinrichtungen zum Einsatz kommen können. Ebensowenig sind demzufolge dieser Druckschrift konkrete Dimensionierungsmaßnahmen für solchermaßen ausgebildete Teilungsstrukturen zu entnehmen, wenn diese als Projektionsteilungen in bestimmten Abtastanordnungen optischer Positionsmeßeinrichtungen fungieren.

Je nach Abtastkonfiguration kann die oben erwähnte Projektions-Teilung dabei an verschiedensten Stellen im Abtast-Strahlengang angeordnet sein, d.h. es ergeben sich eine Reihe von möglichen Abtastkonfigurationen im Rahmen der vorliegenden Erfindung, die allesamt die oben erwähnten Vorzüge hinsichtlich der geringen Abtastabstandsempfindlichkeit aufweisen. Selbstverständlich können lineare Abtastanordnungen dabei ebenso erfindungsgemäß ausgebildet werden wie rotatorische Varianten.

In der erfindungsgemäßen Vorrichtung wird die jeweilige Projektions-Teilung derart ausgelegt, daß neben den geraden Beugungsordnungen zumindest die ± 3. Beugungsordnungen unterdrückt werden. Bereits durch eine derartige Maßnahme läßt sich eine signifikante Verringerung der Abtastabstandsempfindlichkeit erzielen, ohne daß höhere Beugungsordnungen die Signalqualität negativ beeinflußen.

Weitere Vorteile sowie Einzelheiten der vorliegenden Erfindung ergeben sich aus der nachfolgenden Beschreibung mehrerer Ausführungsbeispiele anhand der beiliegenden Zeichnungen.

Dabei zeigt

Figur 1a — 1d    jeweils Ansichten bzw. Teilansichten eines ersten Ausführungsbeispieles der erfindungsgemäßen Positionsmeßeinrichtung;

Figur 2a und 2b    je eine Teilansicht einer ersten geeigneten Projektions-Teilung für die erfindungsgemäße Positionsmeßeinrichtung;

Figur 3    ein Ausführungsbeispiel der erfindungegmäßen Positionsmeßeinrichtung in gestreckter Darstellung zur Erläuterung bestimmter geometrischer Größen;

Figur 4a und 4b    je eine Teilansicht einer zweiten geeigneten Projektions-Teilung für die erfindungsgemäße Positionsmeßeinrichtung;

Figur 5a und 5b    je eine Teilansicht einer dritten geeigneten Projektions-Teilung für die erfindungsgemäße Positionsmeßeinrichtung;

Figur 6a und 6b    jeweils Ansichten bzw. Teilansichten eines zweiten Ausführungsbeispieles der erfindungsgemäßen Positionsmeßeinrichtung;

Figur 7    eine Ansicht eines dritten Ausführungsbeispieles der erfindungsgemäßen Positionsmeßeinrichtung;

Figur 8    eine Darstellung zur Abhängigkeit des Gitterbildkontrastes vom Abtastabstand bei erfindungsgemäß ausgelegten Positionsmeßeinrichtungen;

Figur 9    eine Darstellung zur Abhängigkeit des Gitterbildkontrastes vom Abtastabstand bei Systemen gemäß dem Stand der Technik.

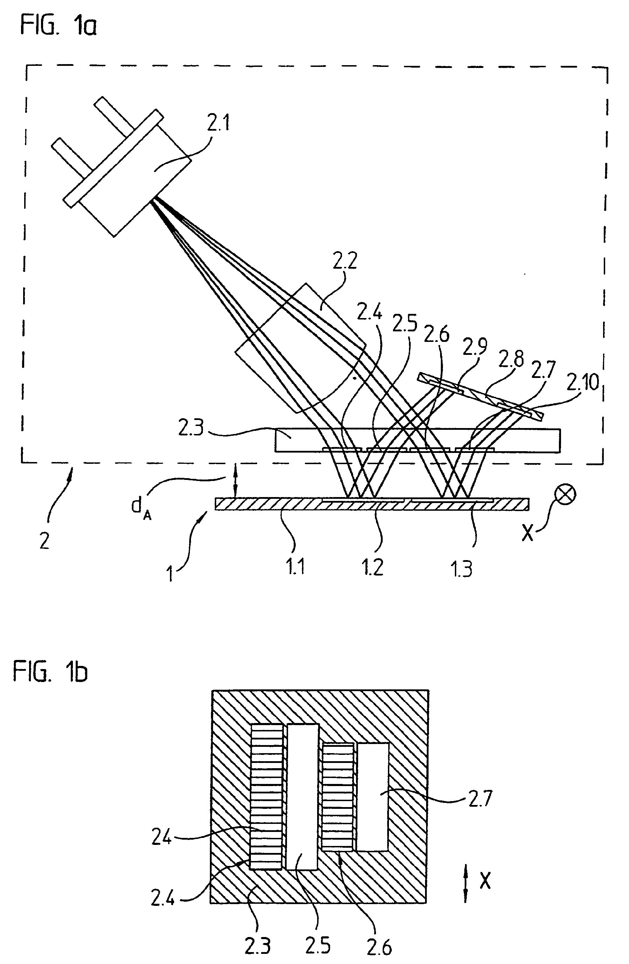

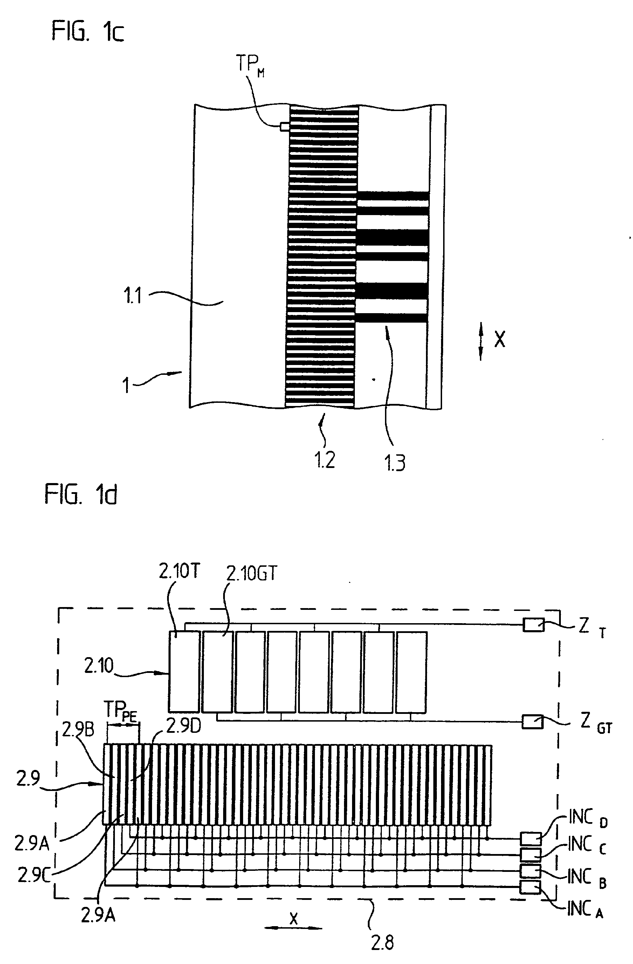

Eine erste Ausführungsform der erfindungsgemäßen Positionsmeßeinrichtung, ausgebildet als Auflicht-System, sei nachfolgend anhand der Figuren 1a — 1d beschrieben. Hierbei zeigt Figur 1a in schematischer Form den Abtaststrahlengang, während in den Figuren 1b — 1d Draufsichten auf die Abtastplatte, den Maßstab sowie die Detektoranordnung der Positionsmeßeinrichtung dargestellt sind.

Die erste Ausführungsform der erfindungsgemäßen Positionsmeßeinrichtung umfaßt einen Maßstab 1 sowie eine Abtasteinheit 2, die relativ zueinander in der angegebenen Meßrichtung x beweglich angeordnet sind, wobei die Meßrichtung x senkrecht zur Zeichenebene orientiert ist. Maßstab 1 und Abtasteinheit 2 sind im Abtastabstand $d_A$ zueinander angeordnet. In dieser Variante dient die dargestellte Positionsmeßeinrichtung zur Erfassung von linearen Relativbewegungen zwischen der Abtasteinheit 2 und dem Maßstab 1 entlang der x-Achse; beispielsweise kann diese Positionsmeßeinrichtung in einer numerisch gesteuerten Werkzeugmaschine eingesetzt werden, um hochpräzise die Relativposition von Werkzeug und Werkstück zu erfassen.

Auf Seiten des Maßstabes 1 ist als Maßverkörperung 1.2 eine in bekannter Art und Weise ausgebildete Inkrementalteilungsspur auf einem Trägerkörper 1.1 angeordnet. Neben der Maßverkörperung 1.2 zur Erzeugung der verschiebungsabhängigen Inkrementalsignale ist im dargestellten Ausführungsbeispiel desweiteren eine Referenzmarkierung 1.3 auf dem Tägerkörper 1.1 des Maßstabes 1 vorgesehen. Mit Hilfe der Referenzmarkierung 1.3 bzw. über die Erzeugung eines entsprechenden Referenzimpulssignales wird im Meßbetrieb in bekannter Art und Weise ein Absolutbezug bei der Positionsmessung hergestellt.

Sowohl die Maßverkörperung 1.2 als auch die Referenzmarkierung 1.3 bestehen aus einer in Meßrichtung x alternierenden Abfolge von Teilbereichen mit unterschiedlichen optischen Reflexionseigenschaften, beispielsweise hochreflektierenden und nicht-reflektierenden Teilbereichen. Die Teilungsperiode der inkrementalen Maßverkörperung 1.2 sei mit $TP_M$ bezeichnet; $TP_M$ ist durch die Summe der Breiten eines hochreflektierenden und eines nichtreflektierenden Teilbereiches in Meßrichtung x definiert.

Die Referenzmarkierung 1.3 besteht in bekannter Art und Weise aus einer aperiodischen Verteilung von Teilbereichen unterschiedlicher Reflexionseigenschaften; selbstverständlich können entlang der jeweiligen Meßstrecke noch mehrere derartige Referenzmarkierungen 1.3 an definierten Positionen benachbart zur Maßverkörperung 1.2 vorgesehen werden wie z.B. abstandscodierte Referenzmarken usw..

Die Abtasteinheit 2 der dargestellten Positionsmeßeinrichtung umfaßt eine Lichtquelle 2.1, eine Kollimatoroptik 2.2, eine Abtastplatte 2.3 sowie eine Detektions-Einheit 2.8. In der Abtastplatte 2.3 sind zwei Fensterbereiche 2.4, 2.6 mit Teilungsstrukturen versehen, während zwei weitere Fensterbereiche 2.5, 2.7 transparent, d.h. ohne Teilungsstrukturen, ausgebildet sind. Ein erstes Paar von Fensterbereichen 2.4, 2.5 dient in Verbindung mit weiteren Komponenten der Positionsmeßeinrichtung zur Erzeugung der verschiebungsabhängigen Inkrementalsignale, während das zweite Paar mit den Fensterbereichen 2.6, 2.7 zur Erzeugung ein oder mehrerer Referenzimpulssignale dient. Auf Seiten der Detektions-Einheit 2.8 ist eine erste Detektoranordnung 2.9 zur Erfassung der Inkrementalsignale vorgesehen; daneben befindet sich die zweite Detektoranordnung 2.10 zur Erfassung der Referenzimpulssignale.

Nachfolgend sei der Abtaststrahlengang zur Erzeugung der Inkrementalsignale innerhalb der dargestellten Positionsmeßeinrichtung erläutert. Auf den Strahlengang zur Erzeugung der Referenzimpulssignale wird an dieser Stelle nicht näher eingegangen.

Die von der Lichtquelle 2.1, z.B. einer strahlstarken Infrarot-LED mit kleiner Emissionsfläche, emittierten Strahlenbündel werden von der Kollimatoroptik 2.2 parallel gerichtet und durchtreten die Teilungsstruktur im Fensterbereich 2.4 in der Abtastplatte 2.3. Bei der Teilungsstruktur im Fensterbereich 2.4 der Abtastplatte 2.3 handelt es sich im vorliegenden Fall um die Projektionsteilung der vorliegenden Positionsmeßeinrichtung, die als Transmissionsteilung ausgebildet ist. Auf die erfindungsgemäße Ausbildung der Projektionsteilung sei im Verlauf der nachfolgenden Beschreibung noch detailliert eingegangen. Anschließend treffen die durch die Projektionsteilung im Fensterbereich 2.4 tretenden Strahlenbündel auf die Maßverkörperung 1.2 auf Seiten des Maßstabes 1, die in diesem Beispiel als Reflexions-Maßverkörperung ausgebildet ist. Die Maßverkörperung 1.2 fungiert in dieser Ausführungsform der erfindungsgemäßen Positionsmeßeinrichtung als Detektionsteilung im oben erläuterten Sinn. Die Projektionsteilung und die Detektionsteilung weisen ferner geringfügig verschiedene Teilungsperioden auf, so daß nach erfolgter Reflexion an der Detektionsteilung bzw. der Maßverkörperung ein periodisches Vernier-Streifenmuster resultiert, wie oben erläutert wurde. Von der Maßverkörperung 1.2 bzw. Detektionsteilung werden die Strahlenbündel in Richtung des transparenten Fensterbereiches 2.5 der Abtastplatte 2.3 reflektiert. Nach dem Durchtreten des transparenten Fensterbereiches 2.5 gelangen die Strahlenbündel auf die Detektoranordnung 2.9 in der Detektions-Einheit 2.8. Die Detektoranordnung 2.9 dient zur Erfassung des Vernier-Streifenmusters und zur Erzeugung der verschiebungsabhängigen Inkrementalsignale. Die zur Erzeugung der Inkrementalsignale erforderliche Vernier-Teilung und die Detektorelemente sind als integrales Bauteil in Form einer sogenannten strukturierten Detektoranordnung 2.9 ausgebildet, wie dies in Figur 1d dargestellt ist. Es ist in dieser Ausführungsform der erfindungsgemäßen Positionsmeßeinrichtung demzufolge keine von den Detektorelementen getrennte Vernier-Teilung vorgesehen. Die Detektoranordnung 2.9 besteht hingegen aus einer Vielzahl einzelner schmaler, rechteckförmiger Detektorelemente 2.9A, 2.9B, 2.9C, 2.9D, die in Meßrichtung x benachbart zueinander angeordnet sind. Je n = 4 Detektorelemente 2.9A, 2.9B, 2.9C, 2.9D sind in dieser Ausführungsform innerhalb einer Periode $TP_{PE}$ der strukturierten Detektoranordnung angeordnet. Die Periode $TP_{PE}$ entspricht in dieser Ausführungsform demzufolge einer Teilungsperiode der Vernier-Teilung. Detektorelemente 2.9A, 2.9B, 2.9C, 2.9D, die jeweils phasengleiche inkrementale Abtastsignale $INC_A$, $INC_B$, $INC_C$, $INC_D$ bei der Abtastung des Vernier-Streifenmusters liefern, sind wie gezeigt leitend miteinander verbunden, d.h. im dargestellten Ausführungsbeispiel sind damit alle Detektorelemente mit dem Bezugszeichen 2.9A miteinander verbunden; ebenso die Detektorelemente mit dem Bezugszeichen 2.9B etc.A. Die vier derart erzeugten Abtastsignale $INC_A$, $INC_B$, $INC_C$, $INC_D$ weisen dann einen Phasenversatz von je 90° zueinander auf. Aus den Abtastsignalen $INC_A$, $INC_B$, $INC_C$, $INC_D$ werden dann in bekannter Art und Weise mit Hilfe von Differenzverstärkern zwei gleichstromanteilfreie Inkrementalsignale mit 90° Phasenversatz erzeugt und z.B. von einer - nicht dargestellten - Auswerteeinrichtung weiterverarbeitet.

Die in Figur 1d dargestellte Detektoranordnung 2.10 zur Erzeugung des Referenzimpulssignales besteht ebenfalls aus einer Vielzahl einzelner Detektorelemente 2.10T, 2.10GT, die in Meßrichtung x aufeinanderfolgend angeordnet sind. Jedes zweite Detektorelement 2.10T, 2.10GT ist hierbei miteinander verschaltet, so daß die beiden Ausgangssignale $Z_T$ und $Z_{GT}$ resultieren, die in Differenz miteinander verschaltet schließlich in bekannter Art und Weise das Referenzimpulssignal liefern. In Bezug auf weitere Einzelheiten zur Referenzimpulssignalerzeugung sei in diesem Zusammenhang auf die deutsche Patentanmeldung Nr. 199 36 181.9 der Anmelderin verwiesen.

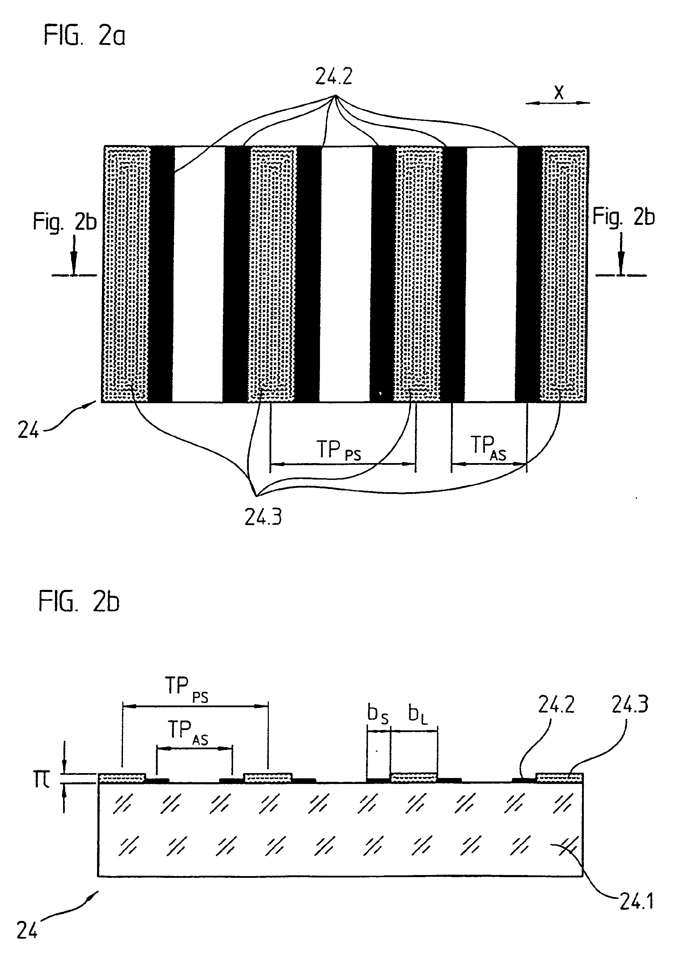

Nachfolgend sei anhand der Figuren 2a und 2b eine erste, bevorzugte Ausführungsform einer geeigneten Projektionsteilung 24 erläutert, wie sie im ersten Ausführungsbeispiel der Positionsmeßeinrichtung in den Figuren 1a — 1d im Fensterbereich 2.4 der Abtastplatte 2.3 eingesetzt wird. Die Verwendung einer derartigen Projektionsteilung 24 stellt sicher, daß die erfindungsgemäße Positionsmeßeinrichtung eine deutlich größere Toleranz hinsichtlich Schwankungen des Abtastabstandes $d_A$ zwischen dem Maßstab 1 und der Abtasteinheit 2 aufweist.

Figur 2a zeigt eine Draufsicht auf einen Teil der Projektionsteilung 24, die in dieser Variante als Transmissions-Teilung ausgebildet ist, während in Figur 2b eine Schnittansicht der Projektionsteilung 24 durch die in Figur 2a eingezeichnete Schnittlinie dargestellt ist.

Die Projektionsteilung 24 dieses Ausführungsbeispiels besteht aus einer Teilungsstruktur, die auf der Oberseite eines transparenten Trägersubstrates 24.1, z.B. Glas, angeordnet ist. Die eigentliche Teilungsstruktur wiederum umfaßt alternierend in Meßrichtung x angeordnete, periodische Amplituden- und Phasenstrukturen. Die Amplitudenstruktur wird hierbei durch periodisch angeordnete, undurchlässige Stege 24.2, z.B. aus Chrom, gebildet. Die periodische Phasenstruktur hingegen besteht aus ebenfalls periodisch angeordneten Stegen 24.3, die eine phasenschiebende Wirkung auf das durchtretende Licht haben; als Material für die phasenschiebenden Stege 24.3 eignen sich etwa $TiO_2$, $SiO_2$ oder aber transparente Sol-Gel-Schichten. Der resultierende Phasenhub $\varphi$ der Stege 24.3 wird gemäß $\varphi = \pi$ gewählt.

Zur Herstellung derart ausgebildeter Projektionsteilungen 24 erweist sich als vorteilhaft, die Stege 24.3 der Phasenstruktur geringfügig breiter als in Fig. 2b dargestellt zu wählen, so daß die Stegkanten etwa mittig auf bzw. unter den undurchlässigen Stegen 24.2 der Amplitudenstruktur liegen.

Entscheidend für die vorteilhafte Wirkung der Projektionsteilung 24 in der erfindungsgemäßen Positionsmeßeinrichtung ist ferner die Wahl der Teilungsperioden bzw. Periodizitäten der Phasen- und Amplitudenstrukturen der Projektionsteilung 24. Mit $TP_{AS}$ sei nachfolgend die Teilungsperiode der Amplitudenstrukturen bzw. die Periodizität der undurchlässigen Stege 24.2 bezeichnet; $TP_{PS}$ hingegen gibt die Teilungsperiode der phasenschiebenden Stege 24.3 der periodischen Phasenstruktur an. Erfindungsgemäß sind die Teilungsperioden $TP_{AS}$, $TP_{PS}$ gemäß den folgenden Beziehungen (1) und (2) zu wählen:

$$TP_{AS} = \tfrac{1}{2} * TP_{PS} \qquad (\text{Gl. 1})$$

$$TP_{AS} = 1/\eta * TP_{DA} \qquad (\text{Gl. 2})$$

Der Parameter $\eta$ in Gl. (2) stellt hierbei einen divergenzbedingten Vergrößerungsfaktor dar, der lediglich im Fall einer divergenten Beleuchtung ohne Kollimationsoptik abweichend von $\eta = 1$ gewählt wird. Im Ausführungsbeispiel der Figuren 1a — 1d, wo ein System mit Kollimationsoptik beschrieben wurde, ist hingegen $\eta = 1$ zu wählen. Grundsätzlich liegt $\eta$ im Bereich $[1; +\infty]$. Allgemein ergibt sich der Vergrößerungsfaktor 1 gemäß folgender Gleichung (2'):

$$\eta = 1 + D_2/D_1 \qquad (\text{Gl. 2'})$$

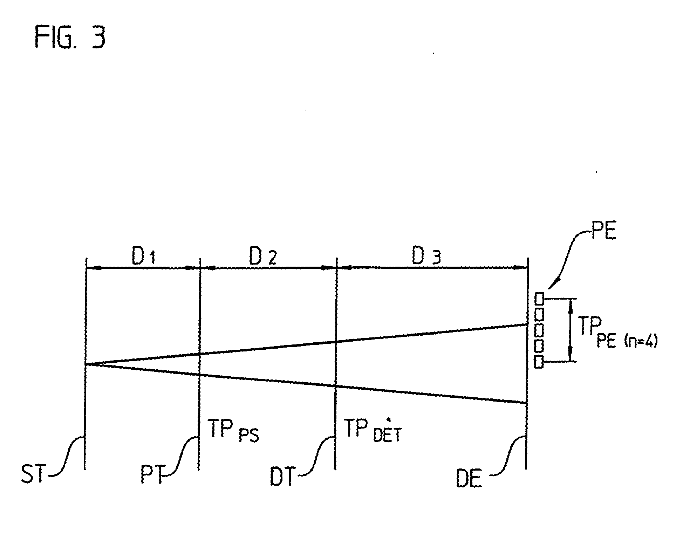

Hierbei stellen die Größen $D_2$ und $D_1$ Abstände zwischen bestimmten Teilungen im Abtaststrahlengang dar, wie sie nachfolgend im Zusammenhang mit der Figur 3 noch detailliert definiert werden.

Die in Gl. (2) desweiteren verwendete Größe $TP_{DA}$ stellt anschaulich die Periode des resultierenden Streifenmusters unmittelbar vor der jeweiligen Detektionsteilung dar. $TP_{DA}$ ergibt sich im allgemeinen Fall gemäß den folgenden Gleichungen (3) und (3'):

$$TP_{DA} = (TP_{DET} * \Lambda) / (\Lambda \pm TP_{DET}) \qquad (\text{Gl. 3}),$$

wobei

$$\Lambda = ((D_1 + D_2) / (D_1 + D_2 + D_3)) * (TP_{PE}/(n * m \pm 1)) \qquad \text{Gl. (3')}$$

Zur Erläuterung der verschiedenen Größen in den Gleichungen (2'), (3), (3') sei auf die Figur 3 verwiesen, die den gestreckten Aufbau einer Positionsmeßeinrichtung mit den relevanten geometrischen Parametern zeigt. Diese besteht im oben diskutierten allgemeinen Fall aus einer (optionalen) Sendeteilung ST, einer Projektionsteilung PT, einer Detektionsteilung DT sowie einer (optionalen) Vernierteilung und nachgeordneten Detektorelementen. In der in Figur 3 dargestellten Variante sind die Vernierteilung und die Detektorelemente als integrales Bauteil in Form der bereits erwähnten strukturierten Detektoranordnung PE in der Detektionsebene DE ausgebildet.

Die verschiedenen Parameter in den beiden Gleichungen (3), (3') sind hierbei folgendermaßen definiert:

$TP_{DET}$:=        Teilungsperiode der verwendeten Detektionsteilung

$D_1$:=        Abstand Sendeteilung — Projektionsteilung, sofern divergentes System mit Sendeteilung vorliegt

$D_2$:=        Abstand Projektionsteilung — Detektionsteilung

$D_3$:=        Abstand Detektionsteilung — Detektionsebene

$TP_{PE}$:=        Periodizität der Detektoranordnung in der Detektionsebene bzw. Teilungsperiode der Vernierteilung in der Detektionsebene

$n = 1, 2, ...$:        Zahl der phasenverschobenen Signalanteile, die von der Detektoranordnung geliefert werden soll

$m = 0, 1, 2, 3, ....$

Die obigen Gleichungen beschreiben sowohl den Fall der kollimierten Beleuchtung als auch den Fall, daß eine erfindungsgemäße Positionsmeßeinrichtung mit divergenter Beleuchtung ausgebildet wird. Im Fall einer kollimierten Beleuchtung ist hierbei wie oben erläutert keine Sendeteilung erforderlich, d.h. es gilt $D_1 \rightarrow \infty$. Bei einer divergenten Beleuchtung ohne Vernierteilung ist in den angegebenen Beziehungen (3) bzw. (3') hingegen $D_3 = 0$ und $TP_{DET} \rightarrow \infty$ zu wählen. Die Funktion der Detektionsteilung übernimmt in diesem Fall dann unmittelbar die strukturierte Detektoranordnung.

Desweiteren ist durch die in Figur 2a und 2b dargestellte Projektionsteilung 24 gewährleistet, daß neben der 0. Beugungsordnung, und den geraden Beugungsordnungen desweiteren auch die $\pm$ 3. Beugungsordnungen unterdrückt werden. Dies wird durch die Wahl der geeigneten Breiten der durchlässigen und undurchlässigen Bereiche der Amplitudenstruktur sowie durch die optische Wirkung der phasenschiebenden Teilbereiche sichergestellt. In der Amplitudenstruktur wird innerhalb einer Teilungsperiode $TP_{AS}$ die Breite $b_S$ eines undurchlässigen Steges 24.2 gemäß $b_S = 1/3\ TP_{AS}$ gewählt, d.h. die Breite $b_L$ eines durchlässigen Lückenbereiches der Amplitudenstruktur beträgt dann dementspechend $b_L = 2/3\ TP_{AS}$. In jedem zweiten durchlässigen Lückenbereich der Amplitudenstruktur ist ein phasenschiebender Teilbereich 24.3 mit dem Phasenhub $\varphi = \pi$ angeordnet.

Die oben genannten Werte für die verschiedenen Breiten ergeben sich aus Rechnungen nach der skalaren Beugungstheorie.

Wie bereits oben angedeutet ist aufgrund der erfindungsgemäßen Ausgestaltung insbesondere der Projektionsteilung 24 nunmehr eine deutlich größere Toleranz gegenüber eventuellen Schwankungen des Abtastabstandes $d_A$ gegeben. Zur Veranschaulichung sei in diesem Zusammenhang auf die Figur 8 verwiesen, die den resultierenden Gitterbildkontrast in Abhängigkeit des Abtastabstandes $d_A$ bei einer erfindungsgemäß ausgestalteten Positionsmeßeinrichtung zeigt. Deutlich erkennbar ist hierbei, wie im Vergleich zur Figur 9 nunmehr über einen relativ großen Bereich des Abtastabstandes $d_A$ ein weitgehend gleichbleibender Gitterbildkontrast und damit eine gleichbleibende Qualität der Abtastsignale resultiert.

Nachfolgend seien die Zahlenangaben für ein konkretes Ausführungsbeispiel der vorliegenden Erfindung auf Basis des ersten Ausführungsbeispieles der Positionsmeßeinrichtung sowie der erläuterten Projektionsteilung aufgeführt:

$D_1 \rightarrow \infty$; $D_2 = 0.8$mm; $D_3 = 3$mm

$TP_{DET} = 20\mu$m; $TP_{PS} = 39.024\mu$m; $TP_{AS} = 19.512\mu$m

$\Lambda = 800\mu$m; $TP_{DA} = 19.512\mu$m; $TP_{PE} = 800\mu$m

$n = 4$; $m = 0$

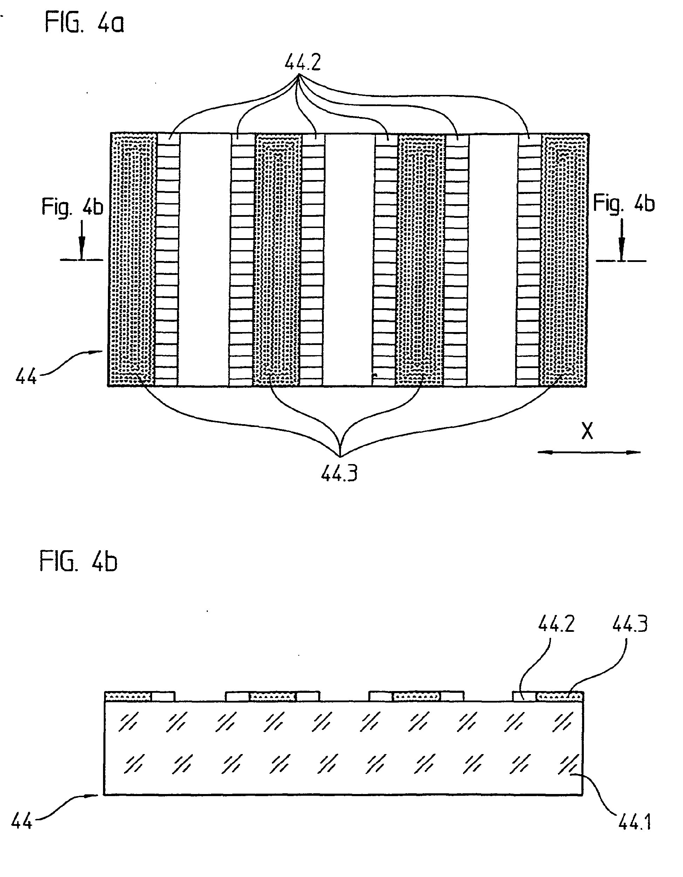

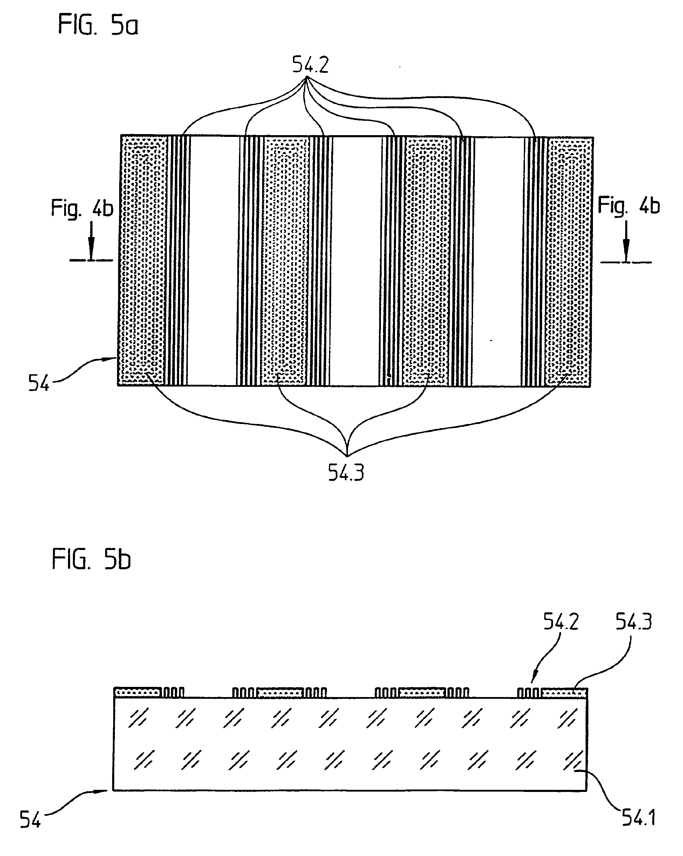

Weitere mögliche Ausführungsformen für geeignete Projektionsteilungen seien nunmehr anhand der Figuren 4a, 4b, 5a und 5b erläutert. Diese Varianten basieren prinzipiell auf dem ersten erläuterten Ausführungsbeispiel der Figuren 2a, 2b.

Unterschiedlich zum ersten Beispiel ist in beiden nachfolgenden Varianten lediglich die Ausgestaltung derjenigen Teilbereiche 24.2 der Projektionsteilung, die dort vollkommen undurchlässig ausgebildet waren.

So ist zweiten Ausführungsbeispiel der Figuren 4a, 4b vorgesehen, die Teilbereiche 44.2, die auf dem Trägersubstrat 44.1 angeordnet sind, mit einer beugenden, transversalen Teilungs-Substruktur zu versehen, die eine starke Ablenkwirkung senkrecht zur Meßrichtung x besitzt. Diese Teilungs-Substruktur bewirkt letztlich ebenfalls wie die undurchlässigen Teilbereiche des ersten Beispieles, daß aus diesen Teilbereichen kein Licht in Richtung der Detektorelemente gelangt. Hierzu ist in transversaler Richtung zur Meßrichtung x eine entsprechende Beugungsstruktur in diesen Teilbereichen 44.2 vorzusehen. Ansonsten gelten für diese Variante der Projektionsteilung 44 ebenfalls die oben angegebenen Dimensionierungs-Regeln. Die periodisch angeordneten Teilbereiche 44.3 der Phasenstruktur sind wie oben ausgebildet.

Ähnlich zum zweiten Beispiel ist das dritte Ausführungsbeispiel einer geeigneten Projektionsteilung 54 ausgebildet, die in den Figuren 5a und 5b in verschiedenen Ansichten gezeigt ist. Im Unterschied zur vorherigen Variante ist nunmehr in den Bereichen 54.2 eine Teilungs-Substruktur vorgesehen, die parallel zur Grund-Teilungsstruktur der Projektionsteilung angeordnet ist. Diese Teilungs-Substruktur bewirkt ebenfalls eine starke Ablenkung von Licht aus diesen Teilbereichen 54.2, so daß letztlich wiederum verhindert wird, daß Licht aus diesen Teilbereichen 54.2 auf die Detektorelemente gelangt. Die Ausbildung der Teilbereiche 54.3 der Phasenstruktur auf dem Trägersubstrat 54.1 entspricht dem obigen Ausführungsbeispiel.

In den beiden zuletzt erläuterten Ausführungsbeispielen geeigneter Projektionsteilungen wurden die undurchlässigen Teilbereiche der Amplitudenstruktur des ersten Ausführungsbeispieles aus den Figuren 2a, 2b demnach mit geeigneten Teilungs-Substrukturen versehen. Diese bewirken aufgrund der starken Ablenkwirkungen jeweils ebenso wie die undurchlässigen Teilbereiche des ersten Beispieles, daß kein Licht aus diesen Teilbereichen in Richtung der Detektorelemente gelangt. Somit sind diese Teilbereiche funktional gleichwertig mit den Amplitudenstrukturen des ersten Ausführungsbeispieles anzusehen.

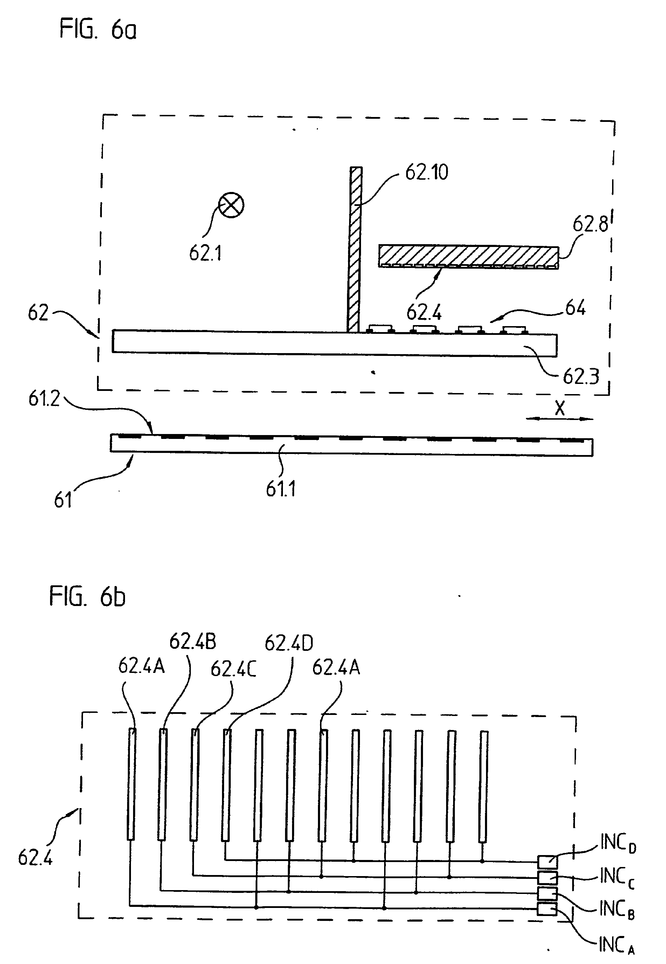

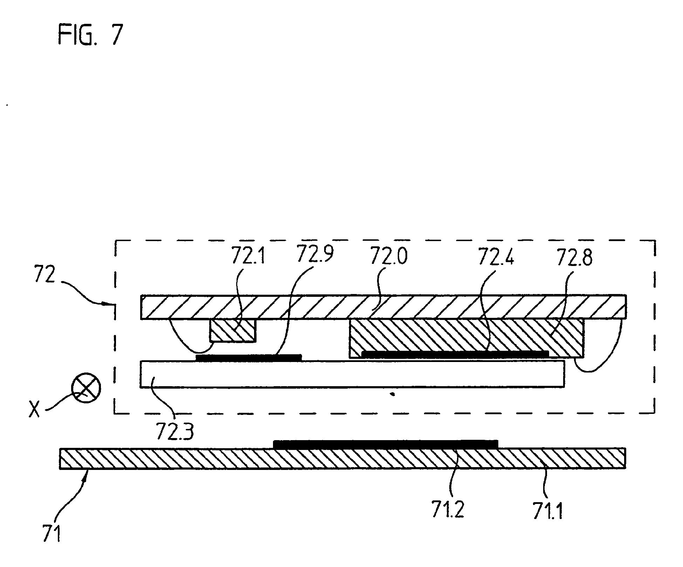

Abschließend seien zwei weitere Ausführungsvarianten der erfindungsgemäßen optischen Positionsmeßeinrichtung anhand der Figuren 6a, 6b und 7 erläutert, die modifizierte Abtastkonfigurationen im Vergleich zur ersten Ausführungsform aus den Figuren 1a — 1d darstellen.

So ist in Figur 6a der grundsätzliche Aufbau eines zweiten Ausführungsbeispieles einer erfindungsgemäßen Positionsmeßeinrichtung dargestellt, die ebenfalls einen Maßstab 61 und eine in Meßrichtung x hierzu bewegliche Abtasteinheit 62 umfaßt. Seitens des Maßstabes 61 ist wiederum auf einem Trägerkörper 61.1 eine geeignete periodische Maßverkörperung 61.2 in bekannter Art und Weise angeordnet. Auf Seiten der Abtasteinheit 62 ist eine Lichtquelle 62.1, eine Abtastplatte 62.3 mit einer darauf angeordneten Projektionsteilung 64, eine Detektions-Einheit 62.8 mit einer strukturierten Detektoranordnung 62.4 sowie ein Blendenelement 62.10 vorgesehen.

Die von der Lichtquelle 62.1 emittierten Strahlenbündel gelangen zunächst — ohne vorherige Kollimation — durch die in diesem Bereich optisch nicht wirksame Abtastplatte 62.3 auf die reflektierende Maßverkörperung 61.2 des Maßstabes 61. Die Maßverkörperung 61.2 wirkt im eingangs erläuterten Sinn nunmehr als Sendeteilung im System mit divergenter Beleuchtung, d.h. die Sendeteilung ist als Reflexionsteilung ausgebildet. Aufgrund der vorgesehenen divergenten Beleuchtung ist auf Seiten der Abtasteinheit 62 ein Blendenelement 62.10 zwischen der Lichtquelle 62.1 und der Detektionseinheit 62.8 angeordnet, welches verhindert, daß emittierte Strahlung direkt von der Lichtquelle 62.1 auf die Detektoranordnung 62.4 gelangen. Von der Maßverkörperung 61.2 erfolgt eine Rückreflexion der darauf auftreffenden Strahlenbündel in Richtung der Projektionsteilung 64, die auf der Abtastplatte 62.3 angeordnet ist. Die Projektionsteilung 64 ist wiederum ausgebildet wie etwa das in den Figuren 2a, 2b erläuterte Ausführungsbeispiel, so daß die geforderte Unabhängigkeit des resultierenden Gitterbildkontrastes vom Abtastabstand sichergestellt ist. Das derart erzeugte periodische Streifenmuster gelangt schließlich auf die Detektoranordnung 62.4 in der Detektionsanordnung 62.8. Wie ebenfalls bereits eingangs erläutert, ist die Detektionsteilung in Verbindung mit den Detektorelementen nunmehr derart ausgebildet, daß dieselbe durch eine sog. strukturierte Detektoranordnung 62.4 gebildet wird, wie sie in Figur 6b gezeigt ist. Detektorelemente und Detektionsteilung sind hierbei demzufolge als integrales Bauteil ausgebildet. Die strukturierte Detektoranordnung 62.4 umfaßt deshalb eine Vielzahl einzelner Detektorelemente 62.4A, 62.4B, 62.4C, 62.4D, die in Meßrichtung x benachbart zueinander und periodisch angeordnet sind. Detektorelemente, die bei der Abtastung des erzeugten Streifenmusters phasengleiche Ausgangssignale liefern, sind wiederum miteinander verschaltet, so daß letztlich vier um 90° phasenversetzte Ausgangssignale $INC_A$, $INC_B$, $INC_C$ und $INC_D$ resultieren, die nachfolgend in bekannter Art und Weise weiterverarbeitbar sind.

Im Gegensatz zum ersten Ausführungsbeispiel tritt nunmehr in der Detektionsebene ein wesentlich feineres Streifensystem auf. Der Grund hierfür liegt darin, daß nunmehr keine separate Detektionsteilung vorgesehen ist, die wie oben erläutert aus einem feinen Streifensystem ein wesentlich gröberes Vernier-Streifenmuster erzeugt. Die Detektion eines derartigen, feineren Streifenmusters erfordert in der Regel bestimmte Maßnahmen auf Seiten der strukturierten Detektoranordnung 62.4, da aufgrund des Übersprechens zwischen benachbarten Detektorelementen 62.4A, 62.4B, 62.4C, 62.4D die einzelnen Detektorelemente nicht beliebig dicht angeordnet werden können. Aus diesem Grund sind die Abstände benachbarter Detektorelemente 62.4A, 62.4B, 62.4C, 62.4D in Meßrichtung x größer als eine halbe Streifenperiode gewählt. Dies bedeutet, daß der Parameter m als m > 0 zu wählen ist. Desweiteren sind die Breiten der Detektorelemente 62.4A, 62.4B, 62.4C, 62.4D kleiner als die jeweilige Streifenperiode zu wählen. Eine lichtundurchlässige Metallschicht, welche auf die strukturierte Detektoranordnung 62.4 aufgedampft wird und Öffnungen im Bereich der einzelnen Detektorelemente 62.4A, 62.4B, 62.4C, 62.4D aufweist, verhindert einen ungewünschten Lichteinfall zwischen den Detektorelementen 62.4A, 62.4B, 62.4C, 62.4D.

Ein drittes Ausführungsbeispiel sei abschließend anhand der Figur 7 erläutert, wobei sich diese Variante wiederum im Hinblick auf den Abtaststrahlengang von den vorab erläuterten Varianten unterscheidet.

Maßstab 71 und Abtasteinheit 72 sind in diesem Beispiel in der angegebenen Meßrichtung x zueinander verschiebbar angeordnet, die wiederum senkrecht zur Zeichenebene orientiert ist. Der Maßstab 71 besteht aus einem Trägerkörper 71.1, auf dem eine in Meßrichtung x periodische Maßverkörperung 71.2 angeordnet ist. Auf Seiten der Abtasteinheit 72 ist auf einer Platine 72.0 eine Lichtquelle 72.1 sowie eine Detektionseinheit 72.8 mit einer Detektionsanordnung 72.4 vorgesehen. Ferner umfaßt die Abtasteinheit 72 eine Abtastplatte 72.3 mit einer darauf angeordneten Sendeteilung 72.9, wobei die Abtastplatte 72.3 der Platine 72.0 in der Abtasteinheit 72 vorgeordnet ist.

Die von der Lichtquelle 72.1 emittierten Strahlenbündel durchtreten zunächst — ebenfalls wieder ohne vorherige Kollimation - die als Transmissionsteilung ausgebildete Sendeteilung 72.9 auf der Abtastplatte 72.3, bevor die Strahlenbündel auf die Maßverkörperung 71.2 treffen, die in diesem Beispiel nunmehr als Projektionsteilung wirkt. Die Projektionsteilung ist in dieser Ausführungsform demnach als Reflexionsteilung ausgebildet, wobei die Projektionsteilung bzw. die Maßverkörperung 71.2 grundsätzlich wiederum wie im Beispiel der Figuren 2a, 2b beschrieben ausgebildet ist, so daß die die geforderte Unabhängigkeit vom Abtastabstand resultiert.

Statt der undurchlässigen Stege im Fall der Transmissionsteilung besteht die Amplitudenstruktur nunmehr aus Stegen mit niedriger Reflexion und/oder stark lichtstreuenden oder lichtablenkenden Eigenschaften. Die phasenschiebende Wirkung der Phasenstruktur wird in bekannter Weise durch Reflexionsflächen unterschiedlicher Höhe erzeugt. Alternativ könnten auch phasenschiebende, transparente Stege auf eine Reflektorschicht aufgebracht werden.

Die von der Maßverkörperung 71.2 bzw. Projektionsteilung reflektierten Strahlenbündel durchtreten nachfolgend einen transparenten Bereich der Abtastplatte 72.3, ehe sie auf die Detektoranordnung 72.4 treffen, die wiederum als strukturierte Detektoranordnung ausgebildet ist. Das heißt, daß die erforderliche Detektionsteilung und die Detektorelemente in einem integralen Bauteil als strukturierte Detektoranordnung 72.4 ausgebildet sind, wie etwa im Ausführungsbeispiel der Figur 1d.

Im Gegensatz zur vorher beschriebenen, zweiten Ausführungsvariante bleiben nunmehr die Abstände $D_1$ und $D_2$ auch bei einer eventuellen Änderung des Abtastabstandes gleich und damit gemäß Gl. (2') der Vergrößerungsfaktor η konstant. Da ferner der Abstand $D_3 \approx 0$ ist, können die einzelnen Teilungsperioden fest und unabhängig vom Abtastabstand gewählt werden. Hieraus wiederum ergeben sich in vorteilhafter Weise besonders große Montagetoleranzen.

Neben den vorab erläuterten Varianten der erfindungsgemäßen optischen Positionsmeßeinrichtung existieren im Rahmen der vorliegenden Erfindung selbstverständlich noch alternative Ausführungsformen.

Beispielsweise kann anstelle der Kombination aus ausgedehnter, divergent abstrahlender Lichtquelle und Sendeteilung auch eine punktförmige, divergent abstrahlende Lichtquelle wie z.B. ein Halbleiterlaser ohne Sendeteilung eingesetzt werden. In diesem Fall bezeichnet die Größe $D_1$ den Abstand zwischen der punktförmigen Lichtquelle und der Projektionsteilung.

Weitere geeignete Modifikationen der vorliegenden Erfindung sind selbstverständlich möglich.

**Patentansprüche**

1.   Optische Positionsmeßeinrichtung mit einer Maßverkörperung (1.2; 61.2; 71.2) sowie einer relativ hierzu in mindestens einer Meßrichtung (x) beweglichen Abtasteinheit (2; 62; 72), wobei die Positionsmeßeinrichtung eine Lichtquelle (2.1; 62.1; 72.1), eine optionale Sendeteilung, eine Projektionsteilung (24; 44; 54), eine Detektionsteilung, eine optionale Vernierteilung sowie mehrere optoelektronische Detektorelemente umfaßt, und das Licht der Lichtquelle (2.1; 62.1; 72.1) in Wechselwirkung mit der Projektionsteilung (24; 44; 54) ein Streifenmuster auf die Detektionsteilung projiziert, so daß über die Detektorelemente verschiebungsabhängige Ausgangssignale erfaßbar sind, wobei die Projektionsteilung (24; 44; 54) derart ausgebildet ist, daß neben geraden Beugungsordnungen und der 0. Beugungsordnung desweiteren die +/- 3. Beugungsordnungen und gegebenenfalls höhere ungerade Beugungsordnungen unterdrückt werden, wodurch im wesentlichen lediglich die ± 1. Beugungsordnungen zur Erzeugung der Ausgangssignale beitragen und die Projektionsteilung (24; 44; 54) aus in Meßrichtung (x) alternierend angeordneten periodischen Amplitudenstrukturen, welche das hindurchtretende bzw. reflektierte Licht ablenken oder unterdrücken und Phasenstrukturen, welche auf das hindurchtretende bzw. reflektierte Licht eine phasenschiebende Wirkung haben, besteht.

2. Positionsmeßeinrichtung nach Anspruch 1, wobei die Amplituden- und Phasenstrukturen jeweils die Periodizitäten $TP_{AS}$, $TP_{PS}$ aufweisen, für die

$$TP_{AS} = \tfrac{1}{2} * TP_{PS}$$

und

$$TP_{AS} = 1/\eta * TP_{DA}$$

gilt, wobei
$\eta$ einen divergenzbedingten Vergrößerungsfaktor angibt, der sich gemäß

$$\eta = 1 + D_2/D_1$$

ergibt und
$TP_{DA}$ die Periode des resultierenden Streifenmusters unmittelbar vor der jeweiligen Detektionsteilung darstellt, die sich gemäß

$$TP_{DA} = (TP_{DET} * \Lambda) / (\Lambda \pm TP_{DET})$$

ergibt,
wobei

$$\Lambda = ((D_1 + D_2) / (D_1 + D_2 + D_3)) * (TP_{PE}/(n * m \pm 1)),$$

mit

$TP_{DET}$ := Teilungsperiode der verwendeten Detektionsteilung
$D_1$ := Abstand Sendeteilung - Projektionsteilung, sofern divergentes System mit Sendeteilung vorliegt
$D_2$ := Abstand Projektionsteilung - Detektionsteilung
$D_3$ := Abstand Detektionsteilung - Detektionsebene
$TP_{PE}$ := Periodizität der Detektoranordnung in der Detektionsebene bzw. Teilungsperiode der Vernierteilung in der Detektionsebene
n = 1, 2,..: Zahl der phasenverschobenen Signalanteile, die von der Detektoranordnung geliefert werden soll;
m = 0, 1, 2, 3, ...

3. Optische Positionsmeßeinrichtung nach Anspruch 1, wobei die Projektionsteilung (24; 44) als Transmissionsteilung ausgebildet ist.

4. Optische Positionsmeßeinrichtung nach Anspruch 1, wobei die Projektionsteilung (54) als Reflexionsteilung ausgebildet ist.

5. Optische Positionsmeßeinrichtung nach Anspruch 1, wobei die Detektionsteilung zusammen mit den Detektorelementen als integrales Bauteil in Form einer strukturierten Detektoranordnung ausgebildet ist.

**6.** Optische Positionsmeßeinrichtung nach Anspruch 2, wobei

a) die Phasenstruktur der Projektionsteilung (24) aus periodisch mit der Teilungsperiode $TP_{PS}$ angeordneten Phasenstruktur-Teilbereichen mit der Breite % . * $TP_{PS}$ mit phasenschiebender Wirkung und einem Phasenhub $\varphi = \pi$ besteht und

b) die Amplitudenstruktur der Projektionsteilung (24) aus periodisch mit der Teilungsperiode $TP_{AS} = TP_{PS}/2$ angeordneten Amplitudenstruktur-Teilbereichen besteht, wobei die Amplitudenstruktur-Teilbereiche für darauf einfallendes Licht undurchlässig ausgebildet sind und in Meßrichtung etwa eine Breite von $TP_{AS}/3$ aufweisen.

**7.** Optische Positionsmeßeinrichtung nach Anspruch 6, wobei in den undurchlässigen Amplitudenstruktur-Teilbereichen der Projektionsteilung (44; 54) eine Teilungs-Substruktur angeordnet ist, über die eine stark ablenkende Wirkung auf die darauf einfallenden Strahlenbündel resultiert, so daß aus diesen Teilbereichen kein Licht auf die Detektorelemente gelangt.

**8.** Optische Positionsmeßeinrichtung nach Anspruch 1, wobei die Elemente in der Abtasteinheit (2) derart angeordnet sind, daß die von der Lichtquelle (2.1) emittierten Strahlenbündel über eine Kollimatoroptik (2.2) auf die als Transmissionsteilung ausgebildete Projektionsteilung (24) gelangen, anschließend auf die als Reflexionsteilung ausgebildete Detektionsteilung (1.2) auftreffen und nach der Rückreflexion von der Detektionsteilung (1.2) auf eine Detektoranordnung (2.9) gelangen, bei der die optionale Vernierteilung und die Detektorelemente als integrales Bauteil ausgebildet sind.

**9.** Optische Positionsmeßeinrichtung nach Anspruch 8, wobei die Projektionsteilung (24) in der Abtasteinheit (2) auf einer Abtastplatte (2.3) angeordnet ist, die benachbart zur Projektionsteilung (24) desweiteren einen transparenten Fensterbereich (2.5) aufweist, durch den die von der Detektionsteilung (1.29) reflektierten Strahlenbündel in die Richtung der Detektoranordnung (2.9) gelangen.

**10.** Optische Positionsmeßeinrichtung nach Anspruch 5, wobei die Elemente in der Abtasteinheit (62) derart angeordnet sind, daß die von der Lichtquelle (62.1) emittierten Strahlenbündel auf eine als Reflexionsteilung ausgebildete Sendeteilung (61.2) gelangen, von dort eine Reflexion in Richtung der Projektionsteilung (64) erfolgt und die Strahlenbündel schließlich nach dem Durchlaufen der Projektionsteilung (64) auf eine strukturierte Detektoranordnung (62.4) gelangen.

**11.** Optische Positionsmeßeinrichtung nach Anspruch 5, wobei die Elemente in der Abtasteinheit (72) derart angeordnet sind, daß die von der Lichtquelle (72.1) emittierten Strahlenbündel eine als Transmissionsteilung ausgebildete Sendeteilung (72.9) durchlaufen, anschließend auf eine als Reflexionsteilung ausgebildete Projektionsteilung (71.2) gelangen und nach Rückreflexion von der Projektionsteilung (71.2) auf eine strukturierte Detektoranordnung (72.4) gelangen.

**Claims**

**1.** An optical device for measuring position with a material measure (1.2; 61.2; 71.2) and also a sampling unit (2; 62; 72) that can move relative to the former in at least one measurement direction (x), wherein
the device for measuring position includes a light source (2.1; 62.1; 72.1), an optional transmitting grating, a projection grating (24; 44; 54), a detection grating, an optional vernier grating as well as a plurality of optoelectronic detector elements, and the light of the light source (2.1; 62.1; 72.1) in interaction with the projection grating (24; 44; 54) projects a stripe pattern onto the detection grating, so that via the detector elements movement-dependent output signals can be registered, wherein
the projection grating (24; 44; 54) is designed such that in addition to even diffraction orders and the $0^{th}$ diffraction order the +/- $3^{rd}$ diffraction orders and, if necessary, higher odd orders can also be suppressed, as a result of which essentially just the $\pm\ 1^{st}$ diffraction orders contribute to the generation of the output signals, and the projection grating (24; 44; 54) consists of periodic amplitude structures, alternately arranged in the measurement direction (x), which diffract or suppress the light passing through or reflected, and phase structures, which have a phase-shifting effect on the light passing through or reflected.

**2.** The optical device for measuring position according to Claim 1, wherein
the amplitude and phase structures have in each case the periodicities $TP_{AS}$, $TP_{PS}$ , for which

$$TP_{AS} = 1/2 * TP_{PS}$$

and

$$TP_{AS} = 1/\eta * TP_{DA}$$

apply, wherein
$\eta$ specifies a divergence-conditioned magnification factor, which ensues from

$$\eta = 1 + D_2/D_1 \ ,$$

and
$TP_{DA}$ represents the period of the resulting stripe pattern immediately before the respective detection grating, which ensues from

$$TP_{DA} = (TP_{DET} * \Lambda) / (\Lambda \pm TP_{DET}) \ ,$$

wherein

$$\Lambda = ((D_1 + D_2) / (D_1 + D_2 + D_3)) * (TP_{PE}/(\eta * m \pm 1)),$$

with

$TP_{DET}$ : = the grating period of the detection grating used
$D_1$: =the separation between transmitting grating and projection grating, insofar as a diversion system with a transmitting grating is present
$D_2$: = the separation between projection grating and detection grating
$D_3$: = the separation between detection grating and detection plane
$TP_{PE}$: = the periodicity of the detector arrangement in the detection plane or the grating period of the vernier grating in the detection plane
n = 1, 2,..: is the number of phase-displaced signal components, which are to be supplied from the detector arrangement;
m = 0,1,2,3,...

3. The optical device for measuring position according to Claim 1, wherein the projection grating (24; 44) is designed as a transmission grating.

4. The optical device for measuring position according to Claim 1, wherein the projection grating (54) is designed as a reflection grating.

5. The optical device for measuring position according to Claim 1, wherein the detection grating together with the detector elements is designed as an integral component in the form of a structured detector arrangement.

6. The optical device for measuring position according to Claim 2, wherein

a) the phase structure of the projection grating (24) consists of phase structure sub-regions periodically arranged with the grating period $TP_{PS}$ , with the width $\frac{1}{2} \cdot TP_{PS}$ with a phase-displacing effect and a phase deviation $\varphi = \pi$, and

b) the amplitude structure of the projection grating (24) consists of amplitude structure sub-regions periodically arranged with the grating period $TP_{AS} = TP_{PS}/2$ , wherein the amplitude structure sub-regions are designed to be opaque to incident light and in the measurement direction have an approximate width of $TP_{AS}/3$ .

**7.** The optical device for measuring position according to Claim 6, wherein
a grating substructure is arranged in the opaque amplitude structure sub-regions of the projection grating (44; 54), via which a strongly diffracting effect results on the incident bundle of rays, so that no light reaches the detector elements from these sub-regions.

**8.** The optical device for measuring position according to Claim 1, wherein
the elements in the scanning unit (2) are arranged such that the bundle of rays emitted from the light source (2.1) reaches the projection grating (24) designed as a transmission grating via collimator optics (2.2), then impinges onto the detection grating (1.2) designed as a reflection grating, and after back-reflection from the detection grating (1.2) reaches a detector arrangement (2.9), in which the optional vernier grating and the detector elements are designed as an integral component.

**9.** The optical device for measuring position according to Claim 8, wherein
the projection grating (24) is arranged in the scanning unit (2) on a scanning plate (2.3), which furthermore has a transparent window region (2.5) adjacent to the projection grating (24), through which window region the bundle of rays reflected from the detection grating (1.29) passes in the direction of the detector arrangement (2.9).

**10.** The optical device for measuring position according to Claim 5, wherein
the elements in the scanning unit (62) are arranged such that the bundle of rays emitted from the light source (62.1) reaches a transmission grating (61.2) designed as a reflection grating, from there reflection takes place in the direction of the projection grating (64) and finally the bundle of rays after passing through the projection grating (64) reaches a structured detector arrangement (62.4).

**11.** The optical device for measuring position according to Claim 5, wherein
the elements in the scanning unit (72) are arranged such that the bundle of rays emitted from the light source (72.1) passes through a transmitting grating (72.9) designed as a transmission grating, then reaches a projection grating (71.2) designed as a reflection grating, and after back-reflection from the projection grating (71.2) reaches a structured detector arrangement (72.4).

**Revendications**

**1.** Dispositif optique de mesurage de position, avec un étalon (1.2 ; 61.2 ; 71.2) et une unité de détection (2 ; 62 ; 72) pouvant être déplacée à cet effet dans au moins une direction de mesurage (x), le dispositif de mesurage de position comprenant une source de lumière (2.1 ; 62.1 ; 72.1), une division d'émission optionnelle, une division de projection (24 ; 44 ; 54), une division de détection, une division de vernissage optionnelle, ainsi que plusieurs éléments de détection optoélectroniques, et la lumière de la source de lumière (2.1 ; 62.1 ; 72.1) projette un motif à rayures sur la division de détection, en interaction avec la division de projection (24 ; 44 ; 54), de façon à ce que des signaux de sortie dépendants du décalage puissent être détectés par les éléments de détection, la division de projection (24 ; 44 ; 54) étant conçue de telle manière que des ordres de diffraction +/- 3 ou éventuellement des ordres de diffraction impairs plus élevés sont supprimés en plus des ordres de diffraction pairs et des ordres de diffraction 0, les signaux de sortie étant essentiellement produits à l'aide des seuls ordres de diffraction $\pm$ 1, et la division de projection (24 ; 44 ; 54) étant constituée de structures d'amplitude périodiques, disposées de façon alternante dans la direction de mesurage (x) et déviant ou supprimant la lumière traversante ou réfléchie, et de structures de phases ayant une action de décalage de phase sur la lumière traversante ou réfléchie.

**2.** Dispositif de mesurage de position selon la revendication 1, les structures d'amplitude et de phases présentant chacune les périodicités $TP_{AS}$, $TP_{PS}$, pour lesquelles

$$TP_{AS} = \frac{1}{2} * TP_{PS}$$

et

$$TP_{AS} = 1/ \eta * TP_{DA}$$

Il indiquant un facteur d'amplification lié à la divergence, qui est donné conformément à

$$TP_{DA} = (TP_{DET} * \Lambda) / (\Lambda \pm TP_{DET})$$

et

$$\Lambda = ((D_1+D_2)/(D_1+D_2+D_3)) * (TP_{PE}/(n*m \pm 1)),$$

avec

$TP_{DET}$ : = période de division de la division de détection utilisée
$D_1$ : = écart division d'émission - division de projection, en présence d'un système divergeant avec une division d'émission,
$D_2$ : = écart division de projection - division de détection
$D_3$ : = écart division de détection - zone de division de détection
$TP_{PE}$ : = périodicité de l'ensemble de détection dans la zone de détection, ou période de division de la division de vernissage dans la zone de détection
$n = 1, 2, ...$ : nombre des parts de signaux décalés en phase qui sont censés être fournis par l'ensemble de détection ;
$m = 0, 1, 2, 3, ...$

3.  Dispositif optique de mesurage de position selon la revendication 1, dans lequel la division de projection (24 ; 44) est conçue comme une division de transmission.

4.  Dispositif optique de mesurage de position selon la revendication 1, dans lequel la division de projection (54) est conçue comme une division de réflexion.

5.  Dispositif optique de mesurage de position selon la revendication 1, dans lequel la division de détection est conçue comme une pièce intégrale ensemble avec les éléments de détection, sous la forme d'un ensemble de détection structurée.

6.  Dispositif optique de mesurage de position selon la revendication 2, dans lequel

    a) la structure de phase de la division de projection (24) est constituée de zones partielles de structure de phase, qui sont disposées périodiquement selon la période de division $TP_{PS}$ et présentent la largeur $\frac{1}{2} * TP_{PS}$, avec une action à décalage de phase et une déviation de phase $\varphi = \pi$ et
    b) la structure d'amplitude de la division de projection (24) est constituée de zones partielles de structure d'amplitude, qui sont disposées périodiquement selon la période de division $TP_{AS} = TP_{PS}/2$, les zones partielles de structure d'amplitude étant conçues de façon à être opaques à la lumière incidente et présentant une largeur de $TP_{AS}/3$ dans la direction de mesurage.

7.  Dispositif optique de mesurage de position selon la revendication 6, dans lequel une sous-structure de division est disposée dans les zones partielles opaques de structure d'amplitude de la division de projection (44 ; 54), cette sous-structure ayant un effet de déviation important sur les faisceaux lumineux incidents, de sorte qu'aucune lumière ne parvienne jusqu'aux les éléments de détection à partir de ces zones partielles.

8. Dispositif optique de mesurage de position selon la revendication 1, dans lequel les éléments situés dans l'unité de détection (2) sont disposés de telle façon que les faisceaux lumineux émis par la source de lumière (2.1) parviennent jusqu'à la division de projection (24) conçue comme division de transmission, par le biais d'une optique de collimation, puis rencontrent la division de détection (1.2) conçue comme division de réflexion, et, après rétro-réflexion depuis la division de détection (1.2), parviennent jusqu'à un ensemble de détection (2.9), dans lequel la division de vernissage et les éléments de détection sont conçus comme une pièce intégrale.

9. Dispositif optique de mesurage de position selon la revendication 8, dans lequel la division de projection (24) située dans l'unité de détection (2) est disposée sur une plaque de détection (2.3) comportant en outre une zone de fenêtre (2.5) transparente, adjacente à la division de projection (24), par laquelle les faisceaux lumineux réfléchis par la division de détection (1.29) parviennent dans la direction de l'ensemble de détection (2.9).

10. Dispositif optique de mesurage de position selon la revendication 5, dans lequel les éléments situés dans l'unité de détection (62) sont disposés de telle manière que les faisceaux lumineux émis par la source de lumière (62.1) parviennent jusqu'à une division d'émission (61.2) conçue comme division de réflexion, à partir de laquelle se produit une réflexion en direction de la division de projection (64), et les faisceaux lumineux parviennent finalement jusqu'à un ensemble de détection (62.4) structuré, après avoir traversé la division de projection (64).

11. Dispositif optique de mesurage de position selon la revendication 5, dans lequel les éléments situés dans l'unité de détection (72) sont disposés de telle manière que les faisceaux lumineux émis par la source de lumière (72.1) traversent une division d'émission (72.9) conçue comme division de transmission, puis parviennent jusqu'à une division de projection (71.2) conçue comme division de réflexion, et atteignent un ensemble de détection (72.4) structuré, après rétro-réflexion depuis la division de projection (71.2).

## FIG. 1a

## FIG. 1b

## FIG. 1c

## FIG. 1d

FIG. 2a

24.2

X

Fig. 2b

Fig. 2b

24

$TP_{PS}$

$TP_{AS}$

24.3

FIG. 2b

$TP_{PS}$

$TP_{AS}$

$b_S$ $b_L$

24.2 24.3

$\pi$

24

24.1

FIG. 3

## FIG. 4a

44.2

Fig. 4b

Fig. 4b

X

44

44.3

## FIG. 4b

44.2    44.3

44

44.1

FIG. 5a

54.2

Fig. 4b

Fig. 4b

54

54.3

FIG. 5b

54.2    54.3

54

54.1

FIG. 6a

62.10

62.8

62.1

62

62.4

64

62.3

X

61.2

61

61.1

FIG. 6b

62.4B        62.4D

62.4A    62.4C    62.4A

62.4

INC_D

INC_C

INC_B

INC_A

FIG. 7

FIG. 8

Abtast - Abstand d$_A$

FIG. 9

Abtast - Abstand d$_A$

Stand der Technik

24

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5646730 A
- US 4618214 A

- DE 19936181

### In der Beschreibung aufgeführte Nicht-Patentliteratur

- **R. PETTIGREW.** Analysis of Grating Imaging and its Application to Displacement Metrology. *European Congress an Optics applied to Metrology,* 1977, vol. 36, 325-332